# EUROPEAN PATENT APPLICATION

(11) **EP 4 215 564 A1**
(43) Date of publication of application: **26.07.2023**
(21) Application number: 21873025.7
(22) Date of filing: 12.08.2021
(51) Int. Cl.: C08G 63/672, C08G 63/78, C08G 63/85

(54) **POLYESTER INCLUDING COMPONENT FROM BIOMASS AND METHOD FOR PREPARING SAME**

(30) Priority: 22.09.2020 KR 20200122488; 23.07.2021 KR 20210097218
(71) Applicant: Kolon Industries, Inc., Seoul 07793 (KR)
(72) Inventor: YONG, Da Kyoung, Seoul 07793 (KR); JEONG, Mee Hye, Seoul 07793 (KR); KIM, Jun Yeong, Seoul 07793 (KR); HA, Ji Min, Seoul 07793 (KR); KIM, Eun Ji, Seoul 07793 (KR); PARK, Ki Hyun, Seoul 07793 (KR)
(74) Representative: Ter Meer Steinmeister & Partner
(86) International application number: PCT/KR2021/095079
(87) International publication number: WO 2022/065997

(57) **Abstract**

The present invention provides polyester and a method for preparing same, the polyester including a repeating unit derived from dihydroxyalkyl tetrahydrofuran obtained from biomass; and a repeating unit derived from short-branched aliphatic dicarboxylic acid. Thus, the polyester has a carbon reduction effect and may be utilized as a novel biomass polyethylene terephthalate (PET) for packaging, by having excellent transparency, impact resistance, flexibility and elastic modulus compared to conventional PET.

## Description

### [Technical Field]

The present invention relates to a polyester containing a component from biomass and a method for preparing the same, and more particularly, to a polyester that can be used as a novel biomass PET for packaging and a method for preparing the same.

### [Background Art]

In modern societies, plastics may not only be mass-produced in various ways but also have excellent lightness, durability, price competitiveness, chemical resistance, and mechanical properties and thus are widely used in human live as well as for food, medicine, agricultural packaging, and industrial packaging.

However, these plastic materials are not decomposed but remain in the ground, when buried after the use, and when incinerated, generate harmful gases such as dioxin.

Since these plastics currently have caused an environmental pollution to a significantly serious level worldwide, development and application of biodegradable resins to disposable products have been actively conducted as one of means to solve this problem.

The biodegradable resins are resins finally decomposed into water and carbon dioxide by microorganisms in soil or water, wherein biodegradable resins developed so far include polylactic acid (PLA) synthesized by a ring-opening reaction of lactic acid or lactide under a chemical catalyst or enzyme, polycaprolactone chemically synthesized by starting from an epsilon caprolactone monomer and diol-dicarboxylic acid-based aliphatic polyester, polyhydroxybutyrate (PHB) synthesized inside microorganisms, and the like, and the most representative examples thereof are polylactic acid (PLA) and aliphatic (or aliphatic/aromatic) polyester obtained by polymerization of diol and dicarboxylic acid, which are dividing the world market.

Specifically, the polylactic acid (PLA) is the most environmentally-friendly product derived from biomass resources but is limitedly used due to physical limitations such as low heat resistance, strong embrittlement, and the like and a slow biodegradation rate.

In contrast, the aliphatic (or aliphatic/aromatic) polyester produced from diol and dicarboxylic acid has similar properties to those of polyethylene, polypropylene, and the like but a problem of hardly controlling a decomposition rate and using raw materials derived from fossil resources to synthesize most of commercialized products. However, the aliphatic-aromatic copolyester resins may not only contribute to solving the problems of depletion of petroleum, which is a finite resource, and global warming but also have a problem of not being environmentally-friendly.

In order to solve this problem, recent research on converting fossil raw materials into raw materials derived from biomass resources due to environmental pollutions caused by carbon dioxide emission and depletion of the fossil raw materials are being actively conducted.

However, biodegradable polyester resins prepared from the biomass-derived raw materials have less reaction completion due to impurities included in the biomass-derived raw materials and thus may be more easily hydrolyzed than the polyester using the fossil-derived raw materials and resultantly, exhibit deteriorated durability and in addition, compared with conventional polyethyleneterephthalate (PET), lack of physical properties such as transparency, impact resistance, flexibility, and an elastic modulus, and the like.

### [Disclosure]

### [Technical Problem]

An embodiment provides polyester that has a carbon reduction effect by including a bio-derivative monomer, and may be used as a new biomass PET for packaging due to excellent transparency, impact resistance, flexibility, and elasticity compared to conventional polyethylene terephthalate (PET).

Another embodiment provides a method for preparing the polyester.

### [Technical Solution]

According to an embodiment, a polyester including a repeating unit represented by Chemical Formula 1 is provided.

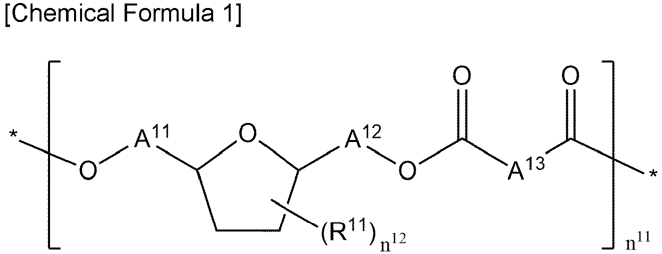

In Chemical Formula 1, A¹¹, A¹², and A¹³ are each independently a linear or branched divalent aliphatic hydrocarbon group having 1 to 15 carbon atoms, R¹¹ is a halogen group, a hydroxyl group, an alkoxy group, or an alkyl group, n¹¹ is the number of repetitions of the repeating unit, and n¹² is an integer from 0 to 6.

A¹³ may be a divalent aliphatic hydrocarbon group having 2 to 15 carbon atoms and having a short-branched chain of 1 to 3 carbon atoms.

A¹³ may be -CHR'-, -CR'₂-, -CH₂CHR'-, -CH₂CR'₂-, -CH₂CH₂CHR'-, - CH₂CH₂CR'₂-, -CH₂CH₂CH₂CHR'-, or -CH₂CH₂CH₂CR'₂- (R' is an alkyl group).

The repeating unit represented by Chemical Formula 1 may be represented by Chemical Formula 2.

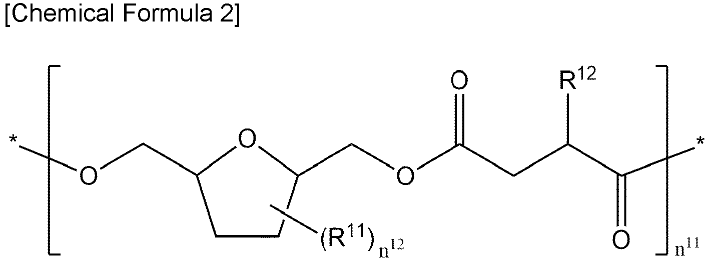

In Chemical Formula 2, R¹¹ and R¹² are each independently a halogen, a hydroxy group, an alkoxy group, or alkyl group, n¹¹ is the number of repetitions of the repeating unit, and n¹² is an integer from 0 to 6.

The polyester may include greater than or equal to 60 mol% of the repeating unit represented by Chemical Formula 1 based on the total amount of the polyester.

The polyester may further include a repeating unit derived from aromatic dicarboxylic acid, aromatic diol, aliphatic diol, or a mixture thereof.

The polyester may have a glass transition temperature (Tg) of 40 °C to 100 °C and a weight average molecular weight of 6000 g/mol to 50000 g/mol.

According to another embodiment, a method for preparing a polyester includes reacting a mixture including dihydroxyalkyl tetrahydrofuran represented by Chemical Formula 3 and an aliphatic dicarboxylic acid represented by Chemical Formula 4 to obtain to prepare a polyester including a repeating unit represented by Chemical Formula 1.

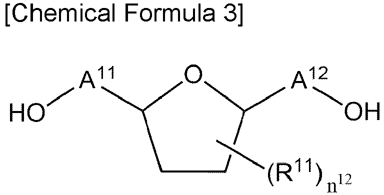

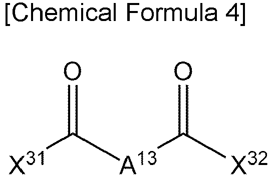

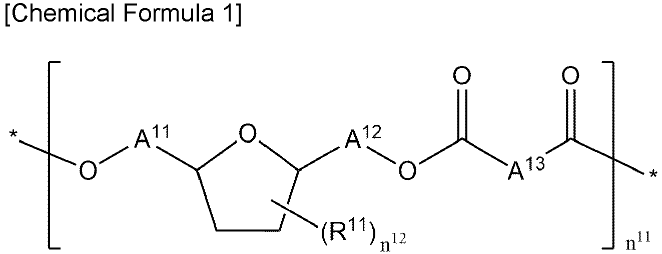

In Chemical Formula 1, Chemical Formula 3, and Chemical Formula 4, A¹¹, A¹², and A¹³ are each independently a linear or branched divalent aliphatic hydrocarbon group having 1 to 15 carbon atoms, R¹¹ is a halogen group, a hydroxyl group, an alkoxy group, or an alkyl group, X³¹ and X³² are each independently a halogen, a hydroxy group, or an alkoxy group, n¹¹ is the number of repetitions of the repeating unit, and n¹² is an integer from 0 to 6.

The aliphatic dicarboxylic acid represented by Chemical Formula 4 is an aliphatic dicarboxylic acid substituted with at least one alkyl group having 1 to 3 carbon atoms, and the aliphatic dicarboxylic acid may be malonic acid, succinic acid, glutaric acid, adipic acid, pimelic acid, suberic acid, azelaic acid, sebacic acid, undecanedioic acid, dodecanedioic acid, maleic acid, or fumaric acid.

The aliphatic dicarboxylic acid substituted with at least one alkyl group having 1 to 3 carbon atoms may be alkylmalonic acid, alkylsuccinic acid, alkylglutaric acid, or alkyladipic acid.

The mixture may further include an aromatic dicarboxylic acid, an aromatic diol, an aliphatic diol, or a mixture thereof.

The reaction may include esterification of a mixture including the dihydroxyalkyl tetrahydrofuran represented by Chemical Formula 3 and an aliphatic dicarboxylic acid represented by Chemical Formula 4, and performing polycondensation of the esterification reaction product in the presence of a polycondensation catalyst.

The esterification reaction may be performed at a pressure of 0 kg/cm² to 10.0 kg/cm² and a temperature of 150 °C to 270 °C.

The polycondensation may be performed at a pressure of 600 mmHg to 0.01 mmHg and a temperature of 150 °C to 290 °C for 0.5 hour to 2.75 hours.

The polycondensation catalyst may include a titanium-based compound, a germanium-based compound, an antimony-based compound, an aluminum-based compound, a tin-based compound, or a mixture thereof.

### [Advantageous Effects]

The polyester according to an embodiment has a carbon reduction effect by including a bio-derivative monomer, and may be used as a new biomass PET for packaging due to excellent transparency, impact resistance, flexibility, and elasticity compared to existing polyethylene terephthalate (PET).

### [Description of the Drawings]

FIG. 1 is a HOMO electron cloud distribution diagram of the three-dimensional structure of Chemical Formula 5.
FIG. 2 is a LUMO electron cloud distribution diagram of the three-dimensional structure of Chemical Formula 5.
FIG. 3 is a HOMO electron cloud distribution diagram of the three-dimensional structure of Chemical Formula 6.
FIG. 4 is a LUMO electron cloud distribution diagram of the three-dimensional structure of Chemical Formula 6.

### [Mode for Invention]

The advantages and features of the present disclosure and the methods for accomplishing the same will be apparent from the embodiments described hereinafter with reference to the accompanying drawings. However, the embodiments should not be construed as being limited to the embodiments set forth herein. Unless otherwise defined, all terms (including technical and scientific terms) used herein have the same meaning as commonly understood by one of ordinary skill in the art. The terms defined in a generally-used dictionary may not be interpreted ideally or exaggeratedly unless clearly defined.

In addition, unless explicitly described to the contrary, the word "comprise", and variations such as "comprises" or "comprising", will be understood to imply the inclusion of stated elements but not the exclusion of any other elements. Further, the singular includes the plural unless mentioned otherwise.

In the present specification, unless otherwise specified, the term "alkyl" refers to a saturated monovalent aliphatic hydrocarbon radical, including linear and branched chains, having the specified number of carbon atoms. The alkyl group typically contains from 1 to 20 carbon atoms ("C₁-C₂₀ alkyl"), desirably from 1 to 12 carbon atoms ("C₁-C₁₂ alkyl"), and more desirably from 1 to 8 carbon atoms ("C₁₋C₈ alkyl"), or from 1 to 6 carbon atoms ("C₁-C₆ alkyl"), or 1 to 4 carbon atoms ("C₁-C₄ alkyl"). Examples of the alkyl group include methyl, ethyl, n-propyl, isopropyl, n-butyl, iso-butyl, tert-butyl, n-pentyl, isopentyl, neopentyl, n-hexyl, n-heptyl, n-octyl, and the like. The alkyl group may be substituted or unsubstituted. In particular, unless otherwise specified, the alkyl group may be substituted with one or more halogens, up to the total number of hydrogen atoms present in the alkyl moiety. Thus, C₁-C₄ alkyl includes halogenated alkyl groups, for example fluorinated alkyl groups having 1 to 4 carbon atoms, such as trifluoromethyl (-CF₃) or difluoroethyl (-CH₂CHF₂).

Alkyl groups described herein as optionally substituted may be substituted with one or more substituents, which substituents are independently selected unless otherwise stated. The total number of substituents is equal to the total number of hydrogen atoms in the alkyl moiety to the extent that this substitution satisfies chemical sense. An optionally substituted alkyl group typically has 1 to 6 optional substituents, often 1 to 5 optional substituents, desirably 1 to 4 optional substituents, and more desirably 1 to 3 optional substituents.

Suitable optional substituents for the alkyl group may include, but are not limited to, C₁-C₈ alkyl, C₂-C₈ alkenyl, C₂-C₈ alkynyl, C₃-C₈ cycloalkyl, 3- to 12-membered heterocyclyl, C₆-C₁₂ aryl, and 5- to 12-membered heteroaryl, halo, =O (oxo), =S (thiono), =N-CN, =N-OR^{x}, =NR^{x}, -CN, -C(O)R^{x}, -CO₂R^{x}, - C(O)NR^{x}R^{y}, -SR^{x}, -SOR^{x}, -SO₂R^{x}, -SO₂NR^{x}R^{y}, -NO₂, -NR^{x}R^{y}, -NR^{x}C(O)R^{y}, - NR^{x}C(O)NR^{x}R^{y}, -NR^{x}C(O)OR^{x}, -NR^{x}SO₂R^{y}, -NR^{x}SO₂NR^{x}R^{y}, -OR^{x}, -OC(O)R^{x}, and -OC(O)NR^{x}R^{y}, wherein R^{x} and R^{y} are each independently hydrogen (H), C₁-C₈ alkyl, C₁-C₈ acyl, C₂-C₈ alkenyl, C₂-C₈ alkynyl, C₃-C₈ cycloalkyl, 3- to 12-membered heterocyclyl, C₆-C₁₂ aryl, and 5- to 12-membered heteroaryl, or R^{x} and R^{y} together with the N atom to which they are attached may form a 3- to 12-membered heterocyclyl or 5- to 12-membered heteroaryl ring, each may optionally include one, two, or three additional heteroatoms selected from O, N, and S(O)_{q} (wherein q is 0 to 2); each of R^{x} and R^{y} is optionally substituted with two substituents selected from halo, =O, =S, =N-CN, =N-OR', =NR', -CN, - C(O)R', -CO₂R', -C(O)NR'₂, -SOR', -SO₂R', -SO₂NR'₂, -NO₂, -NR'₂, -NR'C(O)R', -NR'C(O)NR'₂, -NR'C(O)OR', -NR'SO₂R', -NR'SO₂NR'₂, -OR', -OC(O)R', and - OC(O)NR'₂, wherein each R' is each independently hydrogen (H), C₁-C₈ alkyl, C₁-C₈ acyl, C₂-C₈ alkenyl, C₂-C₈ alkynyl, C₃-C₈ cycloalkyl, 3- to 12-membered heterocyclyl, C₆-C₁₂ aryl, or C₅-C₁₂ heteroaryl; and each of the C₁-C₈ alkyl, C₂-C₈ alkenyl, C₂-C₈ alkynyl, C₃-C₈ cycloalkyl, 3- to 12-membered heterocyclyl, C₆-C₁₂ aryl, and 5- to 12-membered heteroaryl may be optionally substituted as additionally defined.

As used herein, the term "divalent aliphatic hydrocarbon (i.e., alkylene)", unless otherwise specified, refers to a divalent hydrocarbyl group having the specified number of carbon atoms, capable of linking two different groups together. Often alkylene refers to -(CH₂)ₙ- (wherein n is 1 to 8, and desirably n is 1 to 4). Where specified, an alkylene may also be substituted with other groups and may include at least one unsubstituted degree (i.e., an alkenylene or an alkynylene moiety) or a ring. The open valency of the alkylene need not be at the opposite end of the chain. Thus, branched alkylene groups such - CH(Me)-, -CH₂CH(Me)-, and -C(Me)₂- are also included within the scope of the term "alkylene," and cyclic groups such as cyclopropane-1,1-diyl and unsaturated groups such as ethylene (-CH=CH-) or propylene (-CH2-CH=CH-) are also the same. Alkylene groups are unsubstituted or substituted by the same groups described herein as suitable for alkyl.

As used herein, the term "halo" or "halogen" refers to fluorine (F), chlorine (Cl), bromine (Br), or iodine (I) unless otherwise specified.

As used herein, the term "hydroxy" refers to the -OH group unless otherwise specified.

In the present specification, unless otherwise specified, the term "alkoxy" refers to a monovalent -O-alkyl group in which the alkyl moiety has the specified number of carbon atoms. The alkoxy group typically includes 1 to 8 carbon atoms ("C₁-C₈ alkoxy"), or 1 to 6 carbon atoms ("C₁₋C₆ alkoxy"), or 1 to 4 carbon atoms ("C₁-C₄ alkoxy"). For example, C₁-C₄ alkoxy includes methoxy (-OCH₃), ethoxy (-OCH₂CH₃), isopropoxy (-OCH(CH₃)₂), tert-butyloxy (-OC(CH₃)₃), and the like. The alkoxy group is unsubstituted or substituted on the alkyl moiety by the same groups described herein as suitable for alkyl. In particular, an alkoxy group may be optionally substituted with one or more halo atoms, in particular one or more fluoro atoms, up to the total number of hydrogen atoms present in the alkyl moiety. Such groups are referred to as "haloalkoxy" having the specified number of carbon atoms and substituted with one or more halo substituents, for example when fluorinated, more specifically "fluoroalkoxy" groups, typically such groups contain from 1 to 6 carbon atoms, desirably 1 to 4 carbon atoms, often 1 or 2 carbon atoms, and 1, 2 or 3 halo atoms (i.e., "C₁-C₆ haloalkoxy", "C₁-C₄ haloalkoxy" or "C₁-C₂ haloalkoxy"). More specifically, a fluorinated alkyl group may be specifically referred to as a fluoroalkoxy group, typically substituted with 1, 2 or 3 fluoro atoms, such as a C₁-C₆, C₁-C₄, or C₁-C₂ fluoroalkoxy group. Thus, C₁-C₄ fluoroalkoxy includes trifluoromethyloxy (-OCF₃), difluoromethyloxy (-OCF₂H), fluoromethyloxy (-OCFH₂), difluoroethyloxy (-OCH₂CF₂H), and the like.

In the present specification, the terms "optionally substituted" and "substituted or unsubstituted" are used interchangeably to indicate that a particular group being described may have no non-hydrogen substituents (i.e., unsubstituted), or the group may have one or more non-hydrogen substituents (i.e., substituted). Unless otherwise specified, the total number of substituents that may be present may equal the number of H atoms present on the unsubstituted form of the described group. When an optional substituent is attached through a double bond (e.g., an oxo (=O) substituent), the group occupies the available valency and the total number of other substituents included is reduced by two. When optional substituents are independently selected from a list of alternatives, the selected groups are the same or different. Throughout this specification, it will be understood that the number and nature of optional substituents will be limited to such extent that such substitutions satisfy chemical sense.

In the present specification, * marked at both ends of the chemical formula indicates that it is linked to another adjacent chemical formula.

According to an embodiment, a polyester including a repeating unit represented by Chemical Formula 1 is provided.

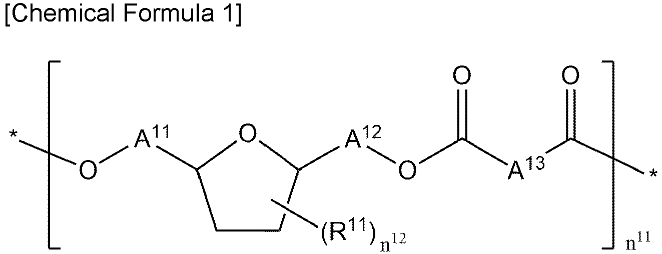

In Chemical Formula 1, A¹¹, A¹², and A¹³ are each independently a linear or branched divalent aliphatic hydrocarbon group having 1 to 15 carbon atoms.

For example, A¹¹ and A¹² may each independently be a linear divalent aliphatic hydrocarbon group having 1 to 3 carbon atoms, and for example, may be a methylene group, an ethylene group, a propylene group, or an isopropylene group.

For example, A¹³ may be a divalent aliphatic hydrocarbon group having 2 to 15 carbon atoms and having a short-branched chain of 1 to 3 carbon atoms, wherein the divalent aliphatic hydrocarbon group having a short-branched chain may mean a divalent aliphatic hydrocarbon group substituted with an alkyl group having at least one carbon atom and 1 to 3 carbon atoms, for example, a branched alkylene group, that is, -CHR'-, -CR'₂-, -CH₂CHR'-, -CH₂CR'₂-, - CH₂CH₂CHR'-, -CH₂CH₂CR'₂-, -CH₂CH₂CH₂CHR'-, or -CH₂CH₂CH₂CR'₂- (R' is an alkyl group), and more specifically -CH(Me)-, -C(Me)₂-, -CH₂CH(Me)-, - CH₂C(Me)₂-, -CH₂CH₂CH(Me)-, -CH₂CH₂C(Me)₂-, -CH₂CH₂CH₂CH(Me)-, or - CH₂CH₂CH₂C(Me)₂- (Me is a methyl group).

The A¹³ and the ester groups (OC(=O)) located on both sides of the A¹³ may be derived from an aliphatic dicarboxylic acid. For example, the aliphatic dicarboxylic acid may be malonic acid, succinic acid, glutaric acid, adipic acid, pimelic acid, suberic acid, azelaic acid, sebacic acid, undecanedioic acid, dodecanedioic acid, maleic acid, or fumaric acid and when A¹³ has a short-branched chain of 1 to 3 carbon atoms, the aliphatic dicarboxylic acid may be alkylmalonic acid, alkylsuccinic acid, alkylglutaric acid, or alkyladipic acid.

In Chemical Formula 1, R¹¹ represents a substituent of the tetrahydrofuran group, and may be, for example, a halogen group, a hydroxyl group, an alkoxy group, or an alkyl group, and n¹² may be an integer of 0 to 6. When n¹² is 0, the tetrahydrofuran is substituted only with hydrogen.

In Chemical Formula 1, n¹¹ represents the number of repetitions of the repeating unit, and n¹¹ may be appropriately adjusted according to the weight average molecular weight of the polyester, and may be for example, 1 or more, 30 to 80, or 100 to 200, but, the present invention is not limited thereto.

The repeating unit represented by Chemical Formula 1 may be represented by Chemical Formula 2. Chemical Formula 2 is a case in which A¹¹ and A¹² are methylene groups and A¹³ is -CH₂CHR'- in Chemical Formula 1.

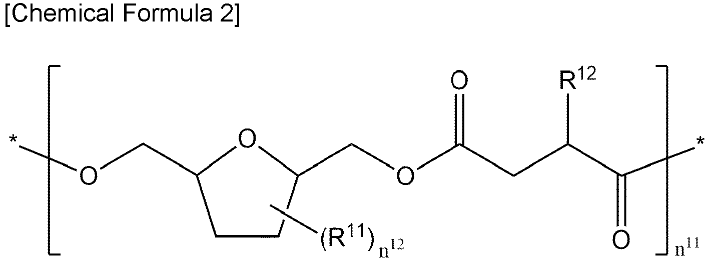

In Chemical Formula 2, since R¹¹, n¹¹, and n¹² are the same as those described in Chemical Formula 1, repetitive descriptions are omitted.

In Chemical Formula 2, R¹² represents a short-branched chain having 1 to 3 carbon atoms of A¹³, and may be, for example, a halogen group, a hydroxyl group, an alkoxy group, or an alkyl group.

The polyester may include greater than or equal to 60 mol%, for example, greater than or equal to 70 mol%, greater than or equal to 80 mol%, greater than or equal to 90 mol%, or even greater than or equal to 100 mol% of the repeating unit represented by Chemical Formula 1 based on the total amount of the polyester.

Accordingly, the polyester may further include a repeating unit derived from aromatic dicarboxylic acid, aromatic diol, aliphatic diol, or a mixture thereof. A description of these will be given later with a description of a method for preparing the polyester.

The polyester may have a glass transition temperature (Tg) of 40 °C to 100 °C, for example, 40 °C to 60 °C, or 60 °C to 80 °C.

When the glass transition temperature is less than 40 °C, the polyester may have neither physical properties nor thermal stability at room temperature, which puts limitations in a filming process for using it a packing material. In addition, in order to secure a glass transition temperature of greater than 100 °C, the polyester should have a molecule structure with a high density, but crystallinity of the polyester may also be increased, deteriorating transparency.

The polyester may have a weight average molecular weight of 6000 g/mol to 50000 g/mol, for example, 6000 g/mol to 20000 g/mol, or 25000 g/mol to 50000 g/mol. When the weight average molecular weight is less than 6000 g/mol, the polyester may be difficult to process into a film as a packing material and not reach a desired modulus, and when the weight average molecular weight is greater than 50000 g/mol, viscosity may be increased, deteriorating productivity.

The polyester includes a repeating unit derived from dihydroxyalkyl tetrahydrofuran obtained from biomass and thus has a carbon reduction effect. In addition, as the polyester includes a repeating unit derived from short-branched aliphatic dicarboxylic acid, the short branch causes steric hindrance during the polyester polymerization, thereby lowering crystallinity of the polyester and thus increasing transparency of a polymer.

In addition, the polyester including the repeating unit has a lower glass transition temperature (Tg) than the conventional PET and thus excellent impact resistance, flexibility, and elastic modulus and accordingly, may be used as novel biomass PET for packaging.

According to another embodiment, a method for preparing the polyester including the repeating unit represented by Chemical Formula 1 is provided by reacting a mixture of dihydroxyalkyl tetrahydrofuran represented by Chemical Formula 3 and aliphatic dicarboxylic acid represented by Chemical Formula 4.

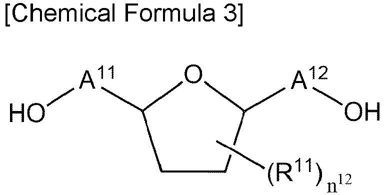

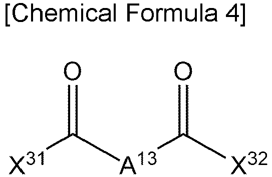

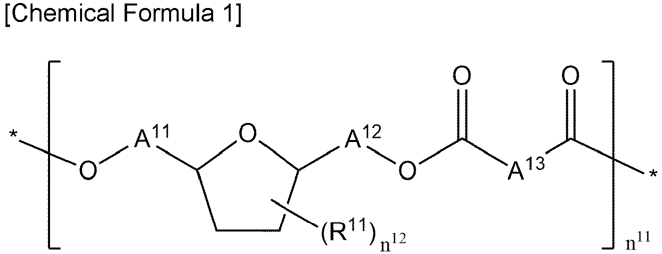

In Chemical Formula 1, Chemical Formula 3, and Chemical Formula 4, A¹¹, A¹², A¹³ , R¹¹, n¹¹, and n¹² are the same as those described in Chemical Formula 1, and thus repeated descriptions are omitted.

In Chemical Formula 4, the X³¹ and X³² may be any functional group capable of reacting with a hydroxy group (OH) of Chemical Formula 3 without particular limitations but include a halogen, a hydroxy group, or an alkoxy group.

The dihydroxyalkyl tetrahydrofuran represented by Chemical Formula 3 is derived from biomass and may be directly obtained from hexose such as glucose or fructose according to Reaction Scheme 1 below. Depending on a synthesis process and a separation step, the dihydroxyalkyl tetrahydrofuran may include cis stereoisomers, trans stereoisomers, or a mixture thereof (cis : trans = 0.1 : 99.9 to 99.9 : 0.1 (wt%)).

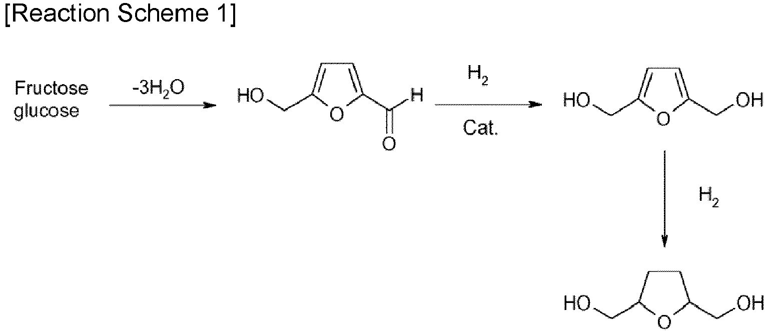

When the dihydroxyalkyl tetrahydrofuran obtained from biomass is prepared into polyester, there may be an effect of reducing carbon.

The aliphatic dicarboxylic acid represented by Chemical Formula 4 may be a divalent aliphatic hydrocarbon group of 2 to 15 carbon atoms having a short-branched chain of 1 to 3 carbon atoms, wherein the divalent aliphatic hydrocarbon group having the short branch may mean a divalent aliphatic hydrocarbon group substituted with at least one alkyl group of 1 to 3 carbon atoms, and the aliphatic dicarboxylic acid may be malonic acid, succinic acid, glutaric acid, adipic acid, pimelic acid, suberic acid, azelaic acid, sebacic acid, undecanedioic acid, dodecanedioic acid, maleic acid, or fumaric acid.

Specifically, the aliphatic dicarboxylic acid substituted with at least one alkyl group having 1 to 3 carbon atoms may be alkylmalonic acid, alkylsuccinic acid, alkylglutaric acid, or alkyladipic acid, and more specifically, methylmalonic acid, methylsuccinic acid, methylglutaric acid, or methyladipic acid.

As the polyester includes a repeating unit derived from the short-branched aliphatic dicarboxylic acid, the short branch causes steric hindrance during the polyester polymerization, lowering crystallinity of the polyester and thus increasing transparency of the polymer.

In addition, the polyester including the repeating unit has a lower glass transition temperature (Tg) than the conventional PET and thus excellent impact resistance, flexibility, and elastic modulus and accordingly, may be used as novel biomass PET for packaging.

Meanwhile, the mixture may further include an aromatic diol and an aliphatic diol as additional diol components in addition to the dihydroxyalkyl tetrahydrofuran represented by Chemical Formula 3.

The aromatic diol may include an aromatic diol compound having 8 to 40 carbon atoms, for example, 8 to 33 carbon atoms. Examples of such aromatic diol compounds may include a bisphenol A derivatives with addition of ethylene oxide and/or propylene oxide (polyoxyethylene-(n)-2,2-bis(4-hydroxyphenyl)propane, polyoxypropylene-(n)-2,2-bis(4-hydroxyphenyl)propane or polyoxypropylene-(n)-polyoxyethylene-(n)-2,2-bis(4-hydroxyphenyl)propane) such as polyoxyethylene-(2.0)-2,2-bis(4-hydroxyphenyl) propane, polyoxypropylene-(2.0)-2,2-bis(4-hydroxyphenyl)propane, polyoxypropylene-(2.2)-polyoxyethylene-(2.0)-2,2-bis(4-hydroxyphenyl)propane, polyoxyethylene-(2.3)-2,2-bis(4-hydroxyphenyl)propane, polyoxypropylene-(6)-2,2-bis(4-hydroxyphenyl)propane, polyoxypropylene-(2.3)-2,2-bis(4-hydroxyphenyl)propane, polyoxypropylene-(2.4)-2,2-bis(4-hydroxyphenyl)propane, polyoxypropylene-(3.3)-2,2-bis(4-hydroxyphenyl)propane, polyoxyethylene-(3.0)-2,2-bis(4-hydroxyphenyl)propane, polyoxyethylene-(6)-2,2-bis(4-hydroxyphenyl)propane, and the like. The n means the number of polyoxyethylene or polyoxypropylene units.

The aliphatic diol may include an aliphatic diol compound having 2 to 20 carbon atoms, for example, 2 to 12 carbon atoms. Examples of such an aliphatic diol compound may include linear, branched, or cyclic aliphatic diol components such as ethylene glycol, diethylene glycol, triethylene glycol, propanediol (1,2-propanediol, 1,3-propanediol, etc.), 1,4-butanediol, pentanediol, hexanediol (1,6-hexanediol, etc.), neopentyl glycol (2,2-dimethyl-1,3-propanediol), 1,2-cyclohexanediol, 1,4-cyclohexanediol, 1,2-cyclohexanedimethanol, 1,3-cyclohexanedimethanol, 1,4-cyclohexanedimethanol, and tetramethylcyclobutanediol.

The mixture may include 10 mol% to 90 mol% or 40 mol% to 85 mol% of the dihydroxyalkyl tetrahydrofuran represented by Chemical Formula 3 and a remaining amount of the additional diol component among all the diol components. When the additional diol component is further included, the polyester may be further improved in terms of mechanical properties, heat resistance, and the like.

In addition, the mixture may further include an aromatic dicarboxylic acid component in addition to the aliphatic dicarboxylic acid represented by Chemical Formula 4.

The aromatic dicarboxylic acid may be an aromatic dicarboxylic acid having 8 to 20 carbon atoms, or desirably 8 to 14 carbon atoms, or a mixture thereof. The aromatic dicarboxylic acid may be for example isophthalic acid, 2,6-naphthalenedicarboxylic acid, and the like naphthalenedicarboxylic acid, diphenyl dicarboxylic acid, 4,4'-stilbenedicarboxylic acid, 2,5-furandicarboxylic acid, 2,5-thiophenedicarboxylic acid, and the like.

Specifically, the aromatic dicarboxylic acid may include terephthalic acid, the terephthalic acid includes a dicarboxylic acid such as terephthalic acid, an alkyl ester thereof (a lower alkyl ester having 1 to 4 carbon atoms such as monomethyl, monoethyl, dimethyl, diethyl, or dibutyl ester) and/or an acid anhydride thereof and may react with a diol component to form a dicarboxylic acid moiety such as a terephthaloyl moiety.

The mixture may include 70 mol% to 100 mol% of the aliphatic dicarboxylic acid represented by Chemical Formula 4 and a remaining amount of the aromatic dicarboxylic acid among all the dicarboxylic acid components.

The reaction may include esterification of the mixture of the dihydroxyalkyl tetrahydrofuran represented by Chemical Formula 3 and the aliphatic dicarboxylic acid represented by Chemical Formula 4 and polycondensation of an esterification product under a polycondensation catalyst.

The esterification reaction may be performed by reacting the diol component and the dicarboxylic acid component under a pressure of about 0 kg/cm² to about 10.0 kg/cm² at 150 °C to 270 °C. The esterification reaction conditions may be appropriately adjusted according to specific characteristics of the prepared polyester, a mole ratio of the and diol dicarboxylic acid components, a process condition, or the like. Specifically, the esterification reaction condition may be, for example, performed at 200 °C to 270 °C or 220 °C to 260 °C.

When the esterification reaction temperature is too low, a reaction yield may be low or insufficient, deteriorating physical properties of the finally prepared d polyester. When the esterification reaction temperature is too high, the prepared polyester may be likely to have yellow appearance, or a depolymerization reaction proceeds, failing in synthesizing a polyester resin in the preparing method.

The transesterification reaction may be carried out in a batch or continuous manner, wherein each raw material may be separately introduced, but for example, slurry in which the diol component is mixed with a dicarboxylic acid component may be put. In addition, the diol component, which is solid at room temperature, is dissolved in a solvent such as water, ethylene glycol, or the like and then, mixed with the dicarboxylic acid component, preparing the slurry.

The dicarboxylic acid component and the diol component may be participated in the esterification reaction in a mole ratio of 1:1.05 to 1:3.0. When the dicarboxylic acid component and the diol component have a mole ratio of less than 1.05, the unreacted dicarboxylic acid component during the polymerization reaction remains, deteriorating transparency of the polymer, and when the mole ratio is greater than 3.0, the polymerization reaction rate may be lowered, or productivity of the polymer may be deteriorated.

The esterification reaction may be carried out under an esterification reaction catalyst including a zinc-based compound. The zinc-based compound may be, for example, zinc acetate, zinc acetate dihydrate, zinc chloride, zinc sulfate, zinc sulfide, zinc carbonate, zinc citrate, zinc gluconate, or a mixture thereof.

The esterification reaction catalyst may be used in an amount of 1 ppm to 100 ppm based on a central metal atom in the synthesized polyester. When the amount of the esterification reaction catalyst is too small, efficiency of the esterification reaction may be difficult to greatly improve, and an amount of reactants not participating in the reaction may greatly increase. In addition, when the amount of the esterification reaction catalyst is too. large, appearance of the prepared polyester may be deteriorated.

Polycondensation of a resulting material from the esterification reaction may be conducted at a pressure of 600 mmHg to 0.01 mmHg under a polycondensation catalyst at 150 °C to 290 °C for 0.5 hours to 2.75 hours.

When the polycondensation reaction is conducted at 150 °C or less, since glycol, a byproduct of the polycondensation reaction may not be effectively removed out of the system, a final reaction product has low intrinsic viscosity, deteriorating properties of the prepared polyester. When the polycondensation reaction is conducted at greater than 290 °C, the prepared polyester may highly possibly have yellow appearance or may not be successfully synthesized as a depolymerization reaction proceeds.

The polycondensation catalyst may be added to the product of the esterification reaction before initiating the polycondensation reaction or added to the mixture of the diol component and the dicarboxylic acid component before the esterification reaction or during the esterification reaction.

The polycondensation catalyst may include a titanium-based compound, a germanium-based compound, an antimony-based compound, an aluminum-based compound, a tin-based compound, or a mixture thereof.

The titanium-based compound may include tetraethyl titanate, acetyltripropyl titanate, tetrapropyl titanate, tetrabutyl titanate, polybutyl titanate, 2-ethylhexyl titanate, octylene glycol titanate, lactate titanate, triethanolamine titanate, acetylacetonate titanate, ethyl acetoacetic ester titanate, isostearyl titanate, titanium dioxide, a titanium dioxide/silicone dioxide copolymer, a titanium dioxide/zirconium dioxide copolymer and the like.

The germanium-based compound may include germanium dioxide (GeO₂), germanium tetrachloride (GeCl₄), germanium ethyleneglycoxide, germanium acetate, copolymers using these, and a mixture thereof.

On the other hand, the preparing method may further include optionally adding a stabilizer or a colorant before or during the esterification reaction or during the polycondensation reaction.

The stabilizer may be selected in consideration of the physical properties of the final polyester and for example, include a phosphorus stabilizer. This phosphorus stabilizer may include phosphoric acid, trimethylphosphate, triethylphosphate, triphenylphosphate, triethyl phosphono acetate, or a mixture of two or more thereof. The stabilizer may be used in an amount of 10 ppm to 300 ppm or 20 ppm to 200 ppm based on a total weight of the synthesized polymer.

The colorant may be a cobalt compound such as cobalt acetate and the like or an organic colorant. This organic colorant may be an anthraquinone-based compound, an azo-based compound, a perinone-based compound, a methine-based compound, a phthalocyanine-based compound, an anthrapyridone-based compound, a perimidine-based compound, or a mixture of two or more thereof. The colorant may be used in an amount of about 1 ppm to about 100 ppm based on the total weight of the prepared resin.

Hereinafter, specific examples of the invention are presented. However, the examples described below are only intended to specifically illustrate or explain the invention, and the scope of the invention should not be limited thereto.

### [Preparation Example: Synthesis of Polymer]

### (Example 1: Synthesis of Biomass-based Polyester)

In a 10 L reactor, 1750 g (35 mol%) of tetrahydrofuran dimethanol (THFDM) was mixed with 3250 g (65 mol%) of methylsuccinic acid, preparing slurry.

The slurry was filled in the reactor by bubbling nitrogen up to 1.5 bar at room temperature, and then, the pressure was lowered to normal pressure, which were repeated for 5 minutes (5 times repeated). After the process, the pressure inside the reactor was reduced to a range of 10 torr to 100 torr, and a vacuum pump was connected to the reactor to remove dissolved oxygen in the slurry for 5 minutes. This process was three times repeated.

To the obtained slurry in which dicarboxylate was mixed with diol, 50 ppm of a zinc acetate catalyst was added and then, esterified at 240 °C for 1.5 hours.

A resulting material from the esterification reaction was transferred to a condensation polymerization reactor equipped with a vacuum device and then, condensation-polymerized, while the pressure was gradually lowered to 1 torr or less over 1 hour to remove low molecular weight products generated due to the condensation, as the temperature was increased to 290 °C. The condensation polymerization reaction was completed at a point when viscosity rapidly increased, obtaining a biomass-based polyester polymer including a repeating unit represented by Chemical Formula 5 (n = 40).

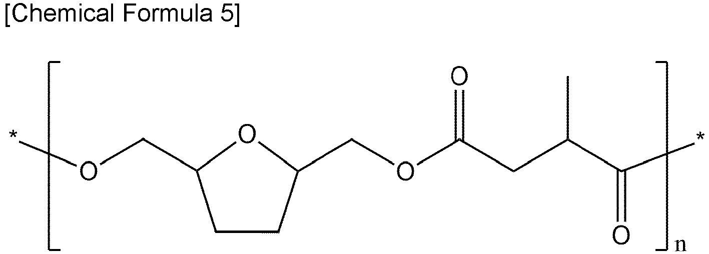

### (Comparative Example 1: Synthesis of Polyethyleneterephthalate)

Polyethyleneterephthalate (PET) including a repeating unit represented by Chemical Formula 6 (n = 40) was prepared in the same manner as in Example 1 except that ethylene glycol was used instead of the tetrahydrofuran dimethanol, and terephthalic acid was used instead of the methylsuccinic acid.

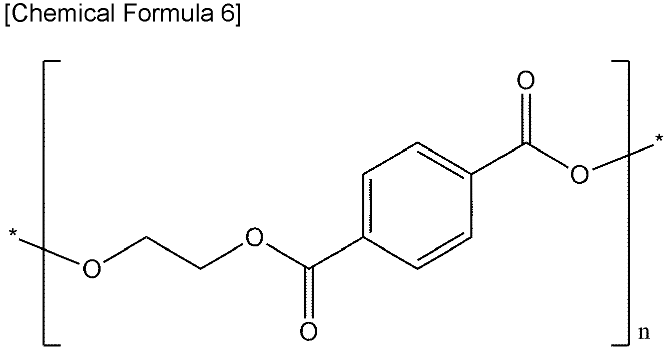

### [Experimental Example: Measurement of Physical Properties of Polyester]

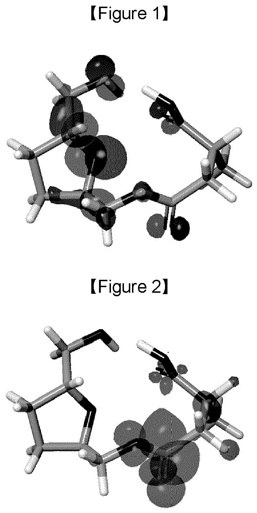

The polymers according to Example 1 and Comparative Example 1 were measured with respect to electron distributions by using Jaguar (B3LYP/6-31G**, 298.15 K, 1 atm), and the results are shown in FIGS. 1 to 4 and Table 1.

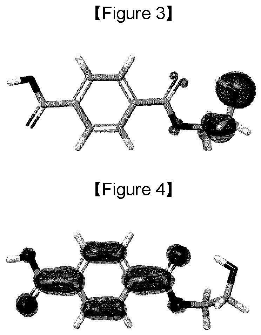

FIG. 1 is an HOMO electron cloud distribution diagram of the three-dimensional structure of Chemical Formula 5, FIG. 2 is a LUMO electron cloud distribution diagram of the three-dimensional structure of Chemical Formula 5, FIG. 3 is an HOMO electron cloud distribution diagram of the three-dimensional structure of Chemical Formula 6, and FIG. 4 is a LUMO electron cloud distribution diagram of the three-dimensional structure of Chemical Formula 6.

In addition, the polymers of Example 1 and Comparative Example 1 were measured with respect to a glass transition temperature and a Young's modulus, and the results are shown in Table 1.

The glass transition temperature was obtained by sampling a portion of each polymer and using a differential scanning calorimeter (DSC). Specifically, the glass transition temperature was determined as a median value between a starting temperature and an ending temperature at which a heat flow curve rapidly changed, while the temperature was increased at 10 °C/min from 25 °C to 200 °C under a nitrogen flow.

The Young's modulus of the polymers was measured according to an ASTM D 412 method by using a universal testing machine (UTM). Specifically, the polymers were respectively made into a film as a specimen, and then, a slope of an initial 0.5 % section on a stress-strain curve analyzed at 500 mm/min was calculates.

In addition, the polymers of Example 1 and Comparative Example 1 were evaluated with respect to transparency by measuring light transmittance (total light transmittance) of each 2.0 mm-thick specimen according to ASTM D1003 by using a hazemeter (Manufacturer: Nippon Denshoku Industries Co., Ltd., Product Name: NDH 5000W), and the results are shown in Table 1.

**(Table 1)**

| | Example 1 | Comparative Example 1 |
|---|---|---|
| Glass transition temperature (°C) | 39 | 60-80 |
| Young's modulus (GPa) | 3.62 | 2.95 |
| HOMO-LUMO gap (Hatrees) | 0.226 | 0.169 |
| Activation energy (ΔG**, kcal/mol) | 53.11 [reaction rate (1/min): 4.38 X 10⁻²⁵] | 51.91 [reaction rate (1/min): 3.32 X 10⁻²⁴] |
| Transparency (%) | 3.9 | 2.8 |

Referring to FIGS. 1 to 4 and Table 1, the polyester of Example 1, compared with the polyethyleneterephthalate of Comparative Example 1, exhibited a low glass transition temperature, a high Young's modulus, and a high transparency and in addition, was obtained at a higher yield than the polyethyleneterephthalate of Comparative Example 1.

Resultantly, polyester of the present invention included a bio-derivative monomer and thus had a carbon reduction effect and exhibited excellent transparency, impact resistance, flexibility, and elastic modulus, compared with the conventional polyethyleneterephthalate (PET), and accordingly, turned out to be used as novel biomass PET for packaging.

### [Industrial Applicability]

The present invention relates to polyester containing a biomass-derived component and a method of preparing the same, which may be used as novel biomass PET for packaging.

## Claims

1. A polyester, comprising a repeating unit represented by Chemical Formula 1: 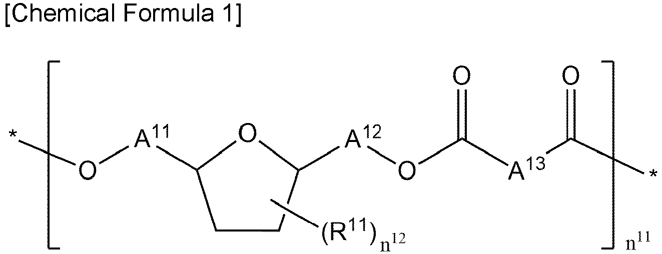 wherein, in Chemical Formula 1,
A¹¹, A¹², and A¹³ are each independently a linear or branched divalent aliphatic hydrocarbon group having 1 to 15 carbon atoms,
R¹¹ is a halogen group, a hydroxyl group, an alkoxy group, or an alkyl group,
n¹¹ is the number of repetitions of the repeating unit, and
n¹² is an integer from 0 to 6.

2. The polyester of claim 1, wherein
A¹³ is a divalent aliphatic hydrocarbon group having 2 to 15 carbon atoms and having a short-branched chain of 1 to 3 carbon atoms.

3. The polyester of claim 2, wherein
A¹³ is -CHR'-, -CR'₂-, -CH₂CHR'-, -CH₂CR'₂-, -CH₂CH₂CHR'-, - CH₂CH₂CR'₂-, -CH₂CH₂CH₂CHR'-, or -CH₂CH₂CH₂CR'₂- (R' is an alkyl group).

4. The polyester of claim 1, wherein
the repeating unit represented by Chemical Formula 1 is represented by Chemical Formula 2: 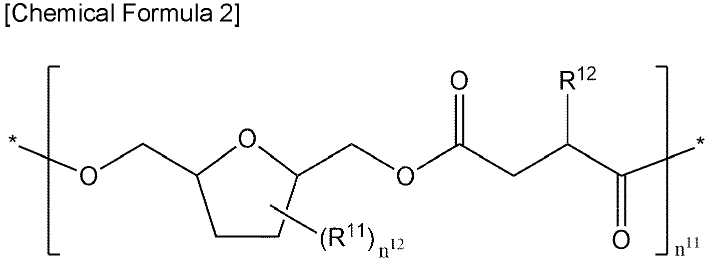 wherein, in Chemical Formula 2,
R¹¹ and R¹² are each independently a halogen, a hydroxy group, an alkoxy group, or alkyl group,
n¹¹ is the number of repetitions of the repeating unit, and
n¹² is an integer from 0 to 6.

5. The polyester of claim 1, wherein
the polyester includes greater than or equal to 60 mol% of the repeating unit represented by Chemical Formula 1 based on the total amount of the polyester.

6. The polyester of claim 5, wherein
the polyester further includes a repeating unit derived from aromatic dicarboxylic acid, aromatic diol, aliphatic diol, or a mixture thereof.

7. The polyester of claim 1, wherein
the polyester has a glass transition temperature (Tg) of 40 °C to 100 °C, and
a weight average molecular weight of 6000 g/mol to 50000 g/mol.

8. A method for preparing a polyester, comprising
reacting a mixture including dihydroxyalkyl tetrahydrofuran represented by Chemical Formula 3, and
an aliphatic dicarboxylic acid represented by Chemical Formula 4,
to prepare a polyester including a repeating unit represented by Chemical Formula 1: 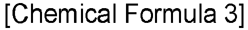 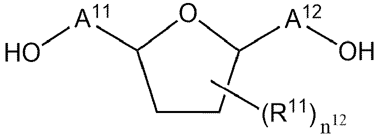 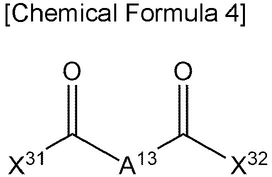 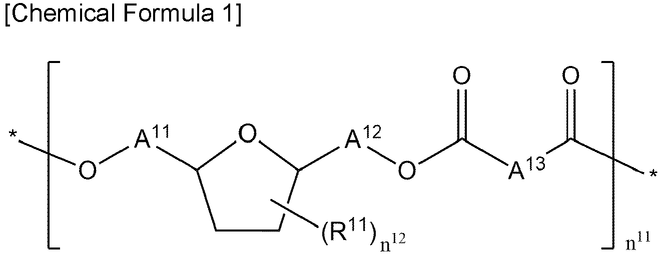 wherein, in Chemical Formula 1, Chemical Formula 3, and Chemical Formula 4,
A¹¹, A¹², and A¹³ are each independently a linear or branched divalent aliphatic hydrocarbon group having 1 to 15 carbon atoms,
R¹¹ is a halogen group, a hydroxyl group, an alkoxy group, or an alkyl group,
X³¹ and X³² are each independently a halogen, a hydroxy group, or an alkoxy group,
n¹¹ is the number of repetitions of the repeating unit, and
n¹² is an integer from 0 to 6.

9. The method for preparing the polyester of claim 8, wherein
the aliphatic dicarboxylic acid represented by Chemical Formula 4 is aliphatic dicarboxylic acid substituted with at least one alkyl group having 1 to 3 carbon atoms, and
the aliphatic dicarboxylic acid is malonic acid, succinic acid, glutaric acid, adipic acid, pimelic acid, suberic acid, azelaic acid, sebacic acid, undecanedioic acid, dodecanedioic acid, maleic acid, or fumaric acid.

10. The method for preparing the polyester of claim 9, wherein
the aliphatic dicarboxylic acid substituted with at least one alkyl group having 1 to 3 carbon atoms is alkylmalonic acid, alkylsuccinic acid, alkylglutaric acid, or alkyladipic acid.

11. The method for preparing the polyester of claim 8, wherein
the mixture further includes aromatic dicarboxylic acid, aromatic diol, aliphatic diol, or a mixture thereof.

12. The method for preparing the polyester of claim 8, wherein
the reaction includes esterification of a mixture including the dihydroxyalkyl tetrahydrofuran represented by Chemical Formula 3 and an aliphatic dicarboxylic acid represented by Chemical Formula 4, and
performing polycondensation of the esterification reaction product in the presence of a polycondensation catalyst.

13. The method for preparing the polyester of claim 12, wherein
the esterification reaction is performed at a pressure of 0 kg/cm² to 10.0 kg/cm² and a temperature of 150 °C to 270 °C.

14. The method for preparing the polyester of claim 12, wherein
the polycondensation is performed at a pressure of 600 mmHg to 0.01 mmHg and a temperature of 150 °C to 290 °C for 0.5 hour to 2.75 hours.

15. The method for preparing the polyester of claim 12, wherein
the polycondensation catalyst includes a titanium-based compound, a germanium-based compound, an antimony-based compound, an aluminum-based compound, a tin-based compound, or a mixture thereof.
